# EUROPÄISCHE PATENTSCHRIFT

(11) **EP 3 946 775 B1**
(45) Veröffentlichungstag und Bekanntmachung des Hinweises auf die Patenterteilung: **31.07.2024**
(21) Anmeldenummer: 19716867.7
(22) Anmeldetag: 04.04.2019
(51) Int. Cl.: B21F 23/00, B21F 27/12

(54) **VORRICHTUNG ZUR BESTUECKUNG EINER KORBSCHWEISSMASCHINE UND KORBSCHWEISSMASCHINE**
APPARATUS FOR EQUIPPING A BASKET WELDING MACHINE AND BASKET WELDING MACHINE
DISPOSITIF POUR L'ÉQUIPEMENT D'UNE MACHINE À SOUDER LES PANIERS ET MACHINE À SOUDER LES PANIERS

(43) Veröffentlichungstag der Anmeldung: 09.02.2022
(60) Teilanmeldung: 24160270.5
(73) Patentinhaber: MBK MASCHINENBAU GmbH, D-88353 Kisslegg (DE)
(72) Erfinder: KAHL, Manfred, 88316 Isny (DE)
(74) Vertreter: Otten, Roth, Dobler & Partner mbB Patentanwälte
(86) Internationale Anmeldenummer: PCT/EP2019/058549
(87) Internationale Veröffentlichungsnummer: WO 2020/200466

(56) Entgegenhaltungen:
- WO-A2-2012/055803
- DE-A1- 2 008 095
- GB-A- 525 485
- JP-A- H0 215 843
- US-A- 5 665 254

## Beschreibung

### Stand der Technik

Eine Vorrichtung zur Bestückung einer Korbschweißmaschine ist bereits aus der JP H02 15843 A bekannt.

Eine bekannte Bestückungsvorrichtung ist als eine automatisierte Vorrichtung ausgebildet, welche eine Korbschweißmaschine mit Längsdrähten eines herzustellenden Bewehrungskorbs bestückt, wobei die Vorrichtung die Längsdrähte des herzustellenden Bewehrungskorbs einzeln, nacheinander in Richtung einer Längsachse der Korbschweißmaschine zuführt, wobei die Längsachse einer Drehachse der Korbschweißmaschine entspricht.

Bei der bekannten Vorrichtung sind dabei die Vorrichtung und die Korbschweißmaschine derart aufeinander abgestimmt, dass ein Produktionsrad der Korbschweißmaschine nach dem Bestücken einer einzelnen Aufnahmeposition mit einem einzelnen Längsdraht durch die Vorrichtung sich um eine Drehachse des Produktionsrads um eine Aufnahmeposition weiterdreht, sodass eine weitere Aufnahmeposition des Produktionsrads, welche noch nicht mit einem Längsdraht bestückt ist, durch die Vorrichtung bestückbar ist. Hierbei wird der Prozess solange wiederholt, bis die Korbschweißmaschine durch die Vorrichtung mit allen für die Herstellung eines Bewehrungskorbs notwendigen Längsdrähten bestückt ist.

### Aufgabe und Vorteile der Erfindung

Der Erfindung liegt die Aufgabe zu Grunde, eine verbesserte Vorrichtung zur Bestückung einer Korbschweißmaschine bereitzustellen, insbesondere eine verbesserte Vorrichtung zur Bestückung einer Korbschweißmaschine bereitzustellen, mittels welcher eine vergleichsweise schnellere Bestückung der Korbschweißmaschine realisierbar ist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Vorrichtung zur Bestückung einer Korbschweißmaschine aus, wobei die Vorrichtung eine Einschubeinrichtung aufweist. Beispielsweise ist die Vorrichtung als eine Einschubeinrichtung zur Zuführung von Längsdrähten an eine Korbschweißmaschine ausgebildet.

Der Korb ist beispielsweise als ein Bewehrungskorb ausgebildet. Vorteilhafterweise ist die Korbschweißmaschine zur Herstellung von Bewehrungen, insbesondere zur Herstellung von Bewehrungskörben für Betonrohre ausgebildet. Beispielsweise umfasst die Korbschweißmaschine eine Schweißanlage zum Verschweißen eines Längsdrahts mit einem Querdraht und/oder eine Bindeeinheit zum Verbinden des Längsdrahts mit dem Querdraht, beispielsweise mittels einer Schlinge. Vorteilhafterweise umfasst die Korbschweißmaschine eine Spreizvorrichtung, die einen Spreizschieber aufweist, wobei der Spreizschieber dazu ausgebildet ist, eine radiale Position eines Stellelements für einen Längsdraht der Bewehrung über ein Übertragungsmittel der Spreizvorrichtung, insbesondere während des Herstellungsprozess der Bewehrung, zu verändern. Das Stellelement ist vorteilhafterweise an einem Spreizrad der Korbschweißmaschine vorhanden. Die Übertragungsmittel der Spreizvorrichtung sind beispielsweise als eine Antriebskette und/oder als eine Antriebsstange ausgeformt. Das Spreizrad, beispielsweise ein Hauptrad und/oder ein Vorschubrad, umfasst z.B. 4 bis 48 Speichen, 8 bis 40 Speichen, 12 bis 36 Speichen, 16 bis 32 Speichen oder 20 bis 28 Speichen, insbesondere 24 Speichen.

Bevorzugterweise umfasst die Korbschweißmaschine ein Hauptrad und ein Vorschubrad. Das Hauptrad ist beispielsweise als Spreizrad vorhanden. Am Hauptrad, insbesondere an den Speichen des Hauptrads sind vorteilhafterweise Drahtführungsrohre befestigt. Bevorzugterweise sind die Drahtführungsrohre in radialer Richtung beweglich am Hauptrad vorhanden. Das Vorschubrad ist vorteilhafterweise zur Klemmung der Längsdrähte und zum Transport der Längsdrähte entlang einer Drehachse der Korbschweißmaschine vom Hauptrad weg während einer Herstellung des Korbs ausgebildet.

Der Korb, z.B. in Form eines Bewehrungskörpers oder eines Bewehrungskorbs, ist vorteilhafterweise als eine Bewehrung eines Rohrs, eines Pfahls, einer Stütze und/oder eines Pfeilers ausgebildet. Der Bewehrungskörper ist beispielsweise in einem Querschnitt, insbesondere quer zu einer Längserstreckung eines Stabs gesehen, rechteckig, quadratisch, mehr- oder vieleckig, rund und/oder oval ausgebildet.

Bevorzugterweise weist der Korb, z.B. der Bewehrungskörper, eine Mehrzahl von Längsdrähten und einen Draht, insbesondere einen Wickeldraht auf, wobei die Längsdrähte durch die Korbschweißmaschine mit dem Wickeldraht verbindbar sind. Denkbar ist auch, dass zwei, drei oder mehr Wickeldrähte am Bewehrungskörper vorgesehen sind.

Ein Längsdraht ist vorteilhafterweise stabförmig ausgebildet. Ein Längsdraht ist beispielsweise als ein Stab, insbesondere als ein Längsstab vorhanden.

Die Korbschweißmaschine ist beispielsweise als eine Pfahl-Bewehrungskorb-Schweißmaschine und/oder ein Pfeiler-Bewehrungskorb-Schweißmaschine und/oder als eine Rohr-Bewehrungskorb-Schweißmaschine und/oder. als eine Bewehrungsrohrschweißmaschine ausgebildet. Denkbar ist auch, dass mit der vorgeschlagenen Korbschweißmaschine ein Bewehrungsmattenkorb, z.B. eine 3-dimensionale Bewehrungsmatte, herstellbar ist.

Erfindungsgemäß weist die Einschubeinrichtung ein Aufnahmeelement zur Aufnahme von Längsdrähten eines mit der Korbschweißmaschine herzustellenden Korbs auf, wobei die Einschubeinrichtung eine Vielzahl von Aufnahmepositionen für alle Längsdrähte des Korbs an dem Aufnahmeelement besitzt, wobei die Aufnahmepositionen in radialer Richtung beabstandet zu einer Drehachse der Einschubeinrichtung vorhanden sind, wobei die Einschubeinrichtung dazu ausgebildet ist, der Korbschweißmaschine in einem Einschubvorgang mindestens zwei an die Einschubeinrichtung angeordnete Längsdrähte gleichzeitig zuzuführen, wobei der Einschubvorgang der Längsdrähte an die Korbschweißmaschine durch eine Bewegung der Einschubeinrichtung in axialer Richtung der Drehachse der Einschubeinrichtung erfolgt, wobei zwei Aufnahmeelemente vorhanden sind, wobei die Aufnahmeelemente die Aufnahmepositionen umfassen, wobei die zwei Aufnahmeelemente in einer axialen Richtung zur Drehachse D der Einschubeinrichtung verschieblich vorhanden sind. Hierdurch ist die Korbschweißmaschine vergleichsweise schnell mit Längsdrähten bestückbar. Bevorzugterweise ist die Einschubvorrichtung dazu ausgebildet der Korbschweißmaschine in einem Einschubvorgang mindestens 3, 4, 5, 6, 7, 8, 9, 10, 11, 12, 14, 16 oder mindestens 18 an die Einschubeinrichtung angeordnete Längsdrähte gleichzeitig zuzuführen.

Die Einschubeinrichtung ist beispielsweise als eine Längsdrahtzuführungsvorrichtung ausgebildet.

Unter der axialen Richtung der Drehachse ist eine Richtung entlang der Drehachse der Einschubeinrichtung zu verstehen. Insbesondere ist unter der axialen Richtung der Drehachse eine Richtung entlang und/oder parallel zu einer Längserstreckung der Drehachse der Einschubeinrichtung zu verstehen. Entsprechend ist unter einer radialen Richtung der Drehachse eine Richtung quer zur axialen Richtung der Drehachse zu verstehen. Zum Beispiel ist unter einer radialen Richtung der Drehachse eine Richtung quer zur Längserstreckung der Drehachse der Einschubeinrichtung auf die Drehachse zu oder von der Drehachse weg zu verstehen.

Das Aufnahmeelement ist vorteilhafterweise als ein Bestückungsrad ausgebildet. Vorteilhafterweise ist das Aufnahmeelement, insbesondere in Form des Bestückungsrads, um die Drehachse der Einschubeinrichtung bewegbar, z.B. drehbar vorhanden.

Das Bestückungsrad umfasst z.B. 4 bis 48 Speichen, 8 bis 40 Speichen, 12 bis 36 Speichen, 16 bis 32 Speichen oder 20 bis 28 Speichen, insbesondere 24 Speichen. Das Bestückungsrad umfasst z.B. 4, 6, 8, 10, 12, 14, 16, 28, 32, 36, 40, 48 oder mehr Speichen. Beispielsweise umfasst das Aufnahmeelement mehr als zwei Aufnahmepositionen, insbesondere mehr als 4 Aufnahmepositionen. Zum Beispiel umfasst das Aufnahmeelement 4, 6, 8, 10, 12, 14, 16, 18, 20, 22, 24, 26, 28, 30, 32, 36, 40 oder 48 Aufnahmepositionen. Die Aufnahmepositionen sind vorteilhafterweise im Bereich der Speichen ausgebildet. Vorteilhafterweise umfasst jede Speiche eine Aufnahmeposition.

Eine Aufnahmeposition ist beispielsweise als eine schlitzartige Ausnehmung am Aufnahmeelement oder des Aufnahmeelements vorhanden. Die Ausnehmung ist beispielsweise als ein Schlitz ausgebildet. Die Aufnahmeposition ist zum Beispiel als eine schlitzartige, z.B. U-förmig oder V-förmig Ausnehmung ausgebildet. Vorteilhafterweise ist eine Längserstreckung der Ausnehmung tangential zur Drehachse der Einschubeinrichtung ausgebildet. Beispielsweise erstreckt sich der Schlitz tangential zur Drehachse der Einschubeinrichtung.

Bevorzugterweise ist die Einschubeinrichtung dazu ausgebildet der Korbschweißmaschine, insbesondere der Spreizvorrichtung der Korbschweißmaschine, mindestens zwei an die Einschubeinrichtung angeordnete Längsdrähte in einem einzigen Einschubvorgang zuzuführen und/oder an die Korbschweißmaschine zu übergeben. Vorteilhafterweise umfasst der Einschubvorgang eine insbesondere einzige Bewegung in einer ausschließlich axialen Richtung der Drehachse. Die Bewegung findet vorteilhafterweise entlang einer Drehachsenerstreckung der Drehachse der Einschubeinrichtung statt. Beispielsweise umfasst der Einschubvorgang eine insbesondere ausschließlich parallele Bewegung zur Drehachse. Vorteilhafterweise ist die Einschubeinrichtung dazu ausgebildet der Korbschweißmaschine alle an die Einschubeinrichtung angeordneten Längsdrähte gemeinsam in einem insbesondere einzigen Einschubvorgang zuzuführen. Bevorzugterweise sind an die Einschubeinrichtung alle zu einer Herstellung eines Korbs erforderlichen Längsdrähte anordenbar.

Bevorzugterweise erfolgt der Einschubvorgang mittels einer einzigen Bewegung der Einschubeinrichtung in axialer Richtung. Beispielsweise umfasst der Einschubvorgang mehrere insbesondere lineare Bewegungen der Einschubeinrichtung. Zum Beispiel umfasst der Einschubvorgang mehrere Bewegungen der Einschubeinrichtung, wobei alle Bewegungen parallel zur Drehachse der Einschubeinrichtung ausgebildet sind. Vorteilhafterweise sind alle Bewegungen des Einschubvorgangs zueinander parallel ausgerichtet vorhanden. Vorteilhafterweise erfolgt der Einschubvorgang durch eine Bewegung des Aufnahmeelements in Richtung der Korbschweißmaschine. Bevorzugterweise umfasst der Einschubvorgang mehrere Bewegungen des Aufnahmeelements, wobei alle Bewegungen des Aufnahmeelements parallel zur Drehachse der Einschubeinrichtung ausgebildet sind. Vorteilhafterweise umfasst der Einschubvorgang eine Hinbewegung des Aufnahmeelements auf die Korbschweißmaschine, insbesondere auf die Spreizvorrichtung der Korbschweißmaschine, zu und eine Herbewegung und/oder Rückbewegung von der Korbschweißmaschine, insbesondere von der Spreizvorrichtung der Korbschweißmaschine, weg. Beispielsweise ist die Hinbewegung als eine Vorbewegung zu verstehen.

Vorteilhafterweise ist die Einschubeinrichtung, insbesondere das Aufnahmeelement in einem insbesondere einzigen Bestückungsvorgang mit allen Längsdrähten bestückbar, welche Längsdrähte zur Herstellung eines Korbs erforderlich sind. Vorteilhafterweise erfolgt der Bestückungsvorgang insbesondere vollständig zeitlich vor dem Einschubvorgang. Bevorzugterweise ist die Einschubeinrichtung durch eine Bewegung des Längsdrahts in einer Richtung quer zur Drehachse der Einschubeinrichtung mit dem Längsdraht bestückbar ausgebildet.

Eine weitere vorteilhafte Ausführungsform der Erfindung ist, dass die Vorrichtung eine Zuführvorrichtung aufweist, wobei die Zuführvorrichtung ein Vorratsgestell, eine Vereinzelungseinrichtung, eine Transportvorrichtung und/oder eine Übergabevorrichtung aufweist und dazu ausgebildet ist, Längsdrähte der Einschubeinrichtung zuzuführen, wobei die Einschubeinrichtung durch eine Bewegung des Längsdrahts in einer Richtung quer zur Drehachse der Einschubeinrichtung mit dem Längsdraht bestückbar ausgebildet ist und die Zuführvorrichtung die Einschubeinrichtung von der Seite bestückt. Hierdurch ist die Einschubeinrichtung vergleichsweise schnell mit Längsdrähten bestückbar. Vorteilhafterweise ist die Einschubeinrichtung durch die Zuführungsvorrichtung schneller mit Längsdrähten bestückbar, als eine Korbschweißmaschine zur Herstellung des Korbs benötigt.

Vorteilhafterweise ist die Seite der Einschubeinrichtung umfänglich an der Einschubeinrichtung vorhanden. Z.B. ist die Seite der Einschubeinrichtung umfänglich nach außen zu sehen. Insbesondere ist die Seite der Einschubeinrichtung quer zur Drehachse der Einschubeinrichtung von der Drehachse weg zu sehen. Beispielsweise ist eines der zwei Aufnahmeelemente ringscheibenartig, radförmig und/oder zylinderförmig ausgebildet und umfasst ein Mantelfläche, z.B. eine Zylindermantelfläche. Die Mantelfläche oder die Zylindermantelfläche bildet vorteilhafterweise die Seite der Einschubeinrichtung. Bevorzugterweise bildet ein Aufnahmeelement eine Ausnehmung an der Mantelfläche.

Bevorzugterweise ist die Einschubeinrichtung in einer lateralen Richtung zur Drehachse der Einschubeinrichtung mit einem Längsdraht bestückbar ausgebildet. Vorteilhafterweise ist die Einschubeinrichtung in radialer Richtung zur Drehachse der Einschubeinrichtung mit Längsdrähten bestückbar ausgebildet. Zum Beispiel sind die Längsdrähte an der Zuführungsvorrichtung derart gelagert, dass eine Längserstreckung der Längsdrähte entlang der Drehachsenerstreckung, insbesondere parallel zur Drehachse, ausgerichtet ist. Beispielsweise ist die Zuführungsvorrichtung, insbesondere die Übergabevorrichtung derart ausgebildet, dass die Zuführungsvorrichtung die Längsdrähte in einer Richtung quer zur Längserstreckung der Längsdrähte der Einschubeinrichtung zuführt.

Das Vorratsgestell der Zuführungsvorrichtung ist vorteilhafterweise derart ausgebildet, dass am oder im Vorratsgestell mehr Längsdrähte lagerbar sind, als zur Herstellung eines Korbs erforderlich sind. Vorteilhafterweise ist das Vorratsgestell als ein Behälter, insbesondere als eine Wanne ausgebildet.

Die Vereinzelungseinrichtung ist beispielsweise derart ausgebildet, dass die Vereinzelungseinrichtung aus einem Vorrat an Längsdrähten, welche im oder am Vorratsgestell gelagert sind, einen einzelnen Längsdraht entnimmt und/oder einen einzelnen Längsdraht aus dem Vorrat aussondert und der Transportvorrichtung zuführt. Bevorzugterweise ist die Vereinzelungseinrichtung dazu ausgebildet, der Transportvorrichtung einen einzelnen Längsdraht zuzuführen. Vorteilhafterweise ist die Vereinzelungseinrichtung dazu ausgebildet der Transportvorrichtung nacheinander einzelne Längsdrähte zuzuführen.

Beispielsweise ist die Übergabevorrichtung ausgebildet, eine Übergabe eines insbesondere einzelnen Längsdrahts von der Transportvorrichtung an die Einschubeinrichtung zu gewährleisten. Vorteilhafterweise ist die Übergabevorrichtung als eine Rutsche vorhanden. Zum Beispiel ist die Rutsche derart ausgebildet, dass ein Längsdraht insbesondere ausschließlich quer zu seiner Längserstreckung von der Transportvorrichtung in Richtung Einschubeinrichtung bewegbar ist.

Auch ist es von Vorteil, dass die Aufnahmeelemente die Aufnahmepositionen umfassen. Hierdurch sind die Längsdrähte vergleichsweise sicher und/oder positionsgenau an der Einschubeinrichtung lagerbar. Ebenfalls ist hierdurch eine vergleichsweise schnelle Zuführung der Längsdrähte an die Korbschweißmaschine realisierbar.

Vorteilhafterweise sind die Aufnahmeelemente entlang der Drehachse der Einschubeinrichtung nebeneinander angeordnet. Beispielsweise sind die Aufnahmeelement in axialer Richtung der Drehachse hintereinander angeordnet.

Vorteilhafterweise umfasst jedes Aufnahmeelement eine Drehachse. Bevorzugterweise erstrecken sich die Drehachsen der beiden Aufnahmeelemente in die gleiche Richtung. Insbesondere sind die Drehachsen der beiden Aufnahmeelemente parallel zueinander ausgerichtet. Vorteilhafterweise fallen die Drehachsen der beiden Aufnahmeelemente, insbesondere aller Aufnahmeelemente der Einschubeinrichtung aufeinander. Beispielsweise bilden die Drehachsen der beiden Aufnahmeelemente, insbesondere aller Aufnahmeelemente der Einschubeinrichtung, die Drehachse der Einschubeinrichtung. Beispielsweise fallen die Drehachsen der Aufnahmeelemente und die Drehachse der Einschubeinrichtung aufeinander.

Die Aufnahmepositionen sind vorteilhafterweise umfänglich verteilt um die Drehachse der Aufnahmeelement, insbesondere umfänglich verteilt um die Einschubeinrichtungsdrehachse, ausgebildet.

Vorstellbar ist auch, dass die Aufnahmeelemente in einem festen, insbesondere unveränderlichen Abstand zueinander beabstandet vorhanden sind. Beispielsweise sind die Aufnahmeelemente miteinander mechanisch gekoppelt. Zum Beispiel sind die Aufnahmeelemente in axialer Richtung in einem festen, insbesondere unveränderlichen Abstand zueinander beabstandet vorhanden.

Vorteilhafterweise erstreckt sich die Seite der Einschubeinrichtung in axialer Richtung der Drehachse der Einschubeinrichtung von einem Aufnahmeelement zum weiteren Aufnahmeelement. Beispielsweise erstreckt sich die Seite der Einschubeinrichtung entlang der Drehachse der Einschubeinrichtung von einem Aufnahmeelement zum weiteren Aufnahmeelement.

Bevorzugterweise sind eine erste Aufnahmeposition eines ersten Aufnahmeelements und eine erste Aufnahmeposition eines zweiten Aufnahmeelements derart zueinander ausgerichtet vorhanden, dass ein Längsdraht in die beiden ersten Aufnahmeposition anordenbar ist, sodass im angeordneten Zustand des Längsdrahts an den ersten Aufnahmepositionen eine Längserstreckung des Längsdrahts entlang, insbesondere parallel zur Drehachse der Einschubeinrichtung vorhanden ist. Beispielsweise sind das erste und das zweite Aufnahmeelement derart zueinander angeordnet vorhanden, dass jeweils eine Aufnahmeposition des ersten Aufnahmeelements und eine Aufnahmeposition des zweiten Aufnahmeelements in einer Weise zueinander ausgerichtet vorhanden sind, dass alle zur Herstellung eines Korbs erforderlichen Längsdrähte in die Aufnahmeposition anordenbar sind, sodass im angeordneten Zustand der Längsdrähte an den Aufnahmepositionen eine Längserstreckung der Längsdrähte entlang, insbesondere parallel zur Drehachse der Einschubeinrichtung vorhanden ist.

Beispielsweise sind alle Aufnahmepositionen eines Aufnahmeelements in radialer Richtung gleich weit von der Drehachse des Aufnahmeelements und/oder der Drehachse der Einschubeinrichtung entfernt am Aufnahmeelement ausgebildet. Beispielsweise sind alle Aufnahmepositionen aller Aufnahmeelemente in radialer Richtung gleich weit entfernt von der Drehachse der Einschubeinrichtung an den Aufnahmeelementen ausgebildet. Vorteilhafterweise sind alle Aufnahmepositionen an einem Aufnahmeelement am Aufnahmeelement positionsfest ausgebildet. Insbesondere sind alle Aufnahmepositionen an einem Aufnahmeelement am Aufnahmeelement in einer radialen Richtung der Drehachse der Einschubeinrichtung positionsfest ausgebildet.

Erfindungsgemäß sind die zwei Aufnahmeelemente entlang der Drehachse der Einschubeinrichtung und/oder entlang einer Erstreckung der Drehachse der Einschubeinrichtung beweglich vorhanden. Vorteilhafterweise ist jedes Aufnahmeelement der Einschubeinrichtung verschieblich vorhanden, insbesondere verschieblich gelagert.

Bevorzugterweise ist zumindest ein Aufnahmeelement relativ zu einem weiteren Aufnahmeelement positionierbar. Insbesondere sind die Aufnahmeelemente relativ zueinander positionierbar. Beispielsweise ist ein Aufnahmeelement in axialer Richtung relativ zu einem weiteren Aufnahmeelement positionierbar, insbesondere verschieblich vorhanden.

Ebenfalls erweist es sich von Vorteil, dass die Einschubeinrichtung eine Welle aufweist, wobei die Welle und zumindest ein Aufnahmeelement rotationsfest miteinander verbunden sind, sodass eine Drehbewegung der Welle eine Drehbewegung des Aufnahmeelements verursacht. Hierdurch sind Stellungen der Aufnahmepositionen durch Drehung der Welle um eine Drehachse der Welle herum veränderbar. Vorteilhafterweise entspricht die Drehachse der Welle der Drehachse der Einschubeinrichtung.

Vorstellbar ist auch, dass die Welle in Form einer Führungseinheit vorhanden ist, wobei die Führungseinheit vorteilhafterweise ein schienenartiges Führungsorgan aufweist. Beispielsweise ist ein Aufnahmeelement durch das schienenartige Führungsorgane in axialer Richtung der Drehachse an der Welle geführt vorhanden. Vorteilhafterweise umfasst die Welle zwei schienenartige Führungsorgane. Beispielsweise ist das schienenartige Führungsorgan als eine Führungsschiene ausgebildet.

Vorteilhafterweise umfasst die Welle eine Getriebeeinheit zum Antrieb eines Aufnahmeelements. Die Getriebeeinheit ist beispielsweise als ein Kettengetriebe und/oder als ein Zahnriemengetriebe ausgebildet.

Vorteilhafterweise ist die Welle derart ausgebildet, dass sie mit einem Wellenende drehbar an der Korbschweißmaschine lagerbar ist. Beispielsweise ist die Welle an einem zweiten Wellenende mit einem Antrieb der Einschubeinrichtung verbunden, wobei das zweite Wellenende entlang der Drehachse beabstandet und gegenüberliegend zum ersten Wellenende vorhanden. Der Antrieb der Einschubeinrichtung ist beispielsweise zum Antreiben, insbesondere zum Drehen der Welle ausgebildet. Vorstellbar ist auch, dass am zweiten Wellenende ein Spreizantrieb zum Antrieb der Spreizvorrichtung der Korbschweißmaschine vorhanden ist. Vorteilhafterweise ist der Spreizantrieb mit dem zweiten Wellenende gekoppelt.

Weiter wird vorgeschlagen, dass ein Aufnahmeelement ein Stützelement aufweist, wobei das Aufnahmeelement am Stützelement drehbar gelagert ist. Hierdurch ist beispielsweise die Welle über ein erstes Aufnahmeelement abgestützt, insbesondere gelagert.

Das Stützelement ist beispielsweise als eine schalenartige Aufnahme ausgebildet, z.B. als eine Halbschale. Beispielsweise umfasst das Stützelement eine Führung mittels welcher das Aufnahmeelement um die Drehachse des Aufnahmeelements, insbesondere um die Drehachse der Eischubeinrichtung geführt drehbar gelagert ist. Vorteilhafterweise ist das Stützelement als ein Stützfuß ausgebildet, insbesondere mit einer schalenartigen Aufnahme. Bevorzugterweise bildet die schalenartige Aufnahme die Führung für das Aufnahmeelement.

Vorteilhafterweise ist das Stützelement an einem Führungselement verschieblich gelagert. Insbesondere ist das Stützelement entlang der Drehachse der Welle verschieblich gelagert. Vorteilhafterweise sind die Aufnahmeelemente verschieblich an einem Führungselement und/oder dem schienenartigen Führungsorgan gelagert. Beispielsweise sind alle Aufnahmeelemente verschieblich am Führungselement und/oder am schienenartigen Führungsorgan gelagert. Das Führungselement ist beispielsweise als ein Schienenelement, z.B. als eine Schiene ausgebildet. Vorteilhafterweise stützt das Stützelement das Aufnahmeelement an einer Bodenfläche ab. Beispielswese ist die Einschubeinrichtung auf der Bodenfläche aufstellbar. Vorteilhafterweise ist das Stützelement über das Führungselement an der Bodenfläche abgestützt vorhanden.

Vorteilhafterweise ist ein zweites Aufnahmeelement entlang der Drehachse zwischen dem ersten Aufnahmeelement und dem Antrieb der Welle vorhanden.

Weiter wird vorgeschlagen, dass ein Aufnahmeelement Klemmelemente umfasst, wobei die Klemmelemente zur Klemmung der am Aufnahmeelement gelagerten Längsdrähte ausgebildet sind. Vorteilhafterweise sind die Klemmelemente im Bereich einer Aufnahmeposition, insbesondere an der Aufnahmeposition vorhanden. Vorteilhafterweise ist genau ein Klemmelement an einer Aufnahmeposition vorhanden. Beispielsweise sind jeweils zwei Klemmelement an jeweils einer Aufnahmeposition vorhanden. Zum Beispiel sind zwei Klemmelemente zueinander zangenartig am Aufnahmeelement ausgebildet.

Bevorzugterweise umfasst ein Klemmelement ein Pufferelement, beispielsweise zwei Pufferelemente. Beispielsweise umfasst ein Klemmelement genau ein Pufferelement, z.B. genau zwei Pufferelemente. Das Pufferelement ist beispielsweise elastisch z.B. pufferartig, insbesondere nachgiebig vorhanden. Denkbar ist, dass das Pufferelement als ein Gummipuffer vorhanden ist.

Vorteilhafterweise ist in einer Schließstellung des Klemmelements ein an der Aufnahmeposition angeordneter Längsdraht an der Aufnahmeposition durch das Klemmelement fixiert. Beispielsweise steht das Klemmelement, insbesondere mit einer Anschlagfläche in der Schließstellung am Längsdraht an. Vorteilhafterweise drückt das Klemmelement in der Schließstellung den Längsdraht gegen einen Anschlag der Aufnahmeposition, sodass der Längsdraht zwischen dem Anschlag der Aufnahmeposition und der Anschlagfläche des Klemmelements geklemmt vorhanden ist. Durch den Einsatz eines Pufferelements ist vorteilhafterweise ein Dimensionsunterschied im Durchmesser zwischen den Längsdrähten ausgleichbar, sodass jeder an die Einschubeinrichtung angeordneter Längsdraht mittels der Klemmelemente in der Schließstellung der Klemmelemente geklemmt ist.

Vorteilhafterweise umfasst die Einschubeinrichtung eine insbesondere pneumatische Antriebseinheit, mittels welcher eine Bewegung der Klemmelemente antreibbar ist. Vorteilhafterweise umfasst die Antriebseinheit einen pneumatischer Antrieb. Der pneumatische Antrieb ist z.B. als ein Pneumatikzylinder ausgebildet. Beispielsweise sind an einem Aufnahmeelement mehrere Antriebseinheiten, z.B. zwei, drei, fünf oder sechs, insbesondere vier Antriebseinheiten angeordnet. Zum Beispiel sind an einem Aufnahmeelement mehrere pneumatische Antriebe, z.B. mehrere Pneumatikzylinder angeordnet. Beispielsweise sind an einem Aufnahmeelement zwei, drei, fünf, sechs oder vier pneumatische Antriebe vorhanden.

Bevorzugterweise umfasst die Antriebseinheit einen Pufferspeicher, welcher am Aufnahmeelement vorhanden ist. Durch die Verwendung eines Pufferspeichers ist die Einschubeinrichtung vergleichsweise schnell und kostengünstig ausgebildet. Vorteilhafterweise ist der Pufferspeicher um die Drehachse des Aufnahmeelements, insbesondere um die Drehachse der Einschubeinrichtung, drehbar gelagert vorhanden. Beispielsweise umfasst die Antriebseinheit mehrere Pufferspeicher, insbesondere zwei, drei oder vier Pufferspeicher. Zum Beispiel ist jeder Pufferspeicher an einem Aufnahmeelement angeordnet. Denkbar ist auch, dass zwei, drei, vier oder mehr Pufferspeicher an jedem Aufnahmeelement angeordnet sind. Beispielsweise ist der Pufferspeicher als ein Tank, z.B. als ein Drucktank ausgebildet. Auch ist es von Vorteil, dass an einem Vorschubrad der Korbschweißmaschine und/oder an einem Aufnahmeelement der Einschubeinrichtung ein Pufferspeicher derart angeordnet ist, dass der Pufferspeicher am Vorschubrad zusammen mit weiteren Elementen des Vorschubrads und/oder der Pufferspeicher am Aufnahmeelement zusammen mit weiteren Elementen des Aufnahmeelements um eine Drehachse der Korbschweißmaschine und/oder um die Drehachse D der Einschubeinrichtung drehbar vorhanden ist. Hierdurch ist beispielsweise ein Öffnen und Schließen von Fixierungselementen des Vorschubrads vergleichsweise schnell ausgeführt.

Vorteilhafterweise ist der Pufferspeicher am Vorschubrad um eine Drehachse der Korbschweißmaschine drehbar vorhanden. Denkbar ist, dass am Vorschubrad mehrere Pufferspeicher ausgebildet sind, z.B. zwei, drei, vier, fünf, sieben oder acht. Insbesondere sind am Vorschubrad sechs Pufferspeicher vorhanden.

Vorteilhafterweise besitzt ein Pufferspeicher ein Aufnahmevolumen, z.B. für Druckluft, von 2 Liter. Zum Beispiel ist das Aufnahmevolumen eines Pufferspeichers, z.B. für Druckluft von 1 bis 15 Liter groß. Beispielsweise ist das Aufnahmevolumen eines Pufferspeichers von 1 bis 10 Liter oder von 2 bis 10 Liter groß. Beispielsweise ist der Pufferspeicher in einem maximal gefüllten Zustand mit einem Druck von 2 bis 12 bar, von 4 bis 10 bar oder von 6 bis 10 bar beaufschlagt.

Vorteilhafterweise ist ein Klemmelement über eine Schwenkachse schwenkbar, insbesondere drehbar am Aufnahmeelement gelagert. Beispielsweise ist ein Klemmelement eines Aufnahmeelements um die Drehachse des Aufnahmeelements, insbesondere um die Drehachse der Einschubeinrichtung, drehbar gelagert vorhanden. Beispielsweise sind alle Klemmelemente eines Aufnahmeelements insbesondere gemeinsam um die Drehachse des Aufnahmeelements, insbesondere um die Drehachse der Einschubeinrichtung, drehbar gelagert vorhanden. Vorteilhafterweise sind alle Klemmelemente eines Aufnahmeelements mittels eines einzigen Antriebs antreibbar, insbesondere bewegbar vorhanden. Vorteilhafterweise ist die Schwenkachse des Klemmelements verschieden von der Drehachse der Einschubeinrichtung. Bevorzugterweise erstrecken sich die Schwenkachse des Klemmelements und die Drehachse der Einschubeinrichtung in eine gleiche Richtung, beispielsweise sind sie zueinander parallel ausgerichtet vorhanden.

Beispielsweise ist das Klemmelement durch die Antriebseinheit in eine Richtung, z.B. in eine Öffnungsrichtung um die Schwenkachse drehbar vorhanden. Denkbar ist auch, dass das Klemmelement durch die Antriebseinheit in eine weitere Richtung, z.B. in eine Schließrichtung um die Schwenkachse drehbar vorhanden ist. Die Schließrichtung und die Öffnungsrichtung sind vorteilhafterweise gegenläufig ausgebildet.

Auch von Vorteil ist, dass im Bereich der Aufnahmeposition ein magnetisches Element zur magnetischen Halterung eines am Aufnahmeelement angeordneten Längsdrahts vorhanden ist. Hierdurch ist ein Längsdraht vergleichsweise einfach und schnell am Aufnahmeelement insbesondere lösbar fixierbar.

Beispielsweise umfasst ein Klemmelement ein magnetisches Element zur magnetischen Halterung eines Längsdrahts im angeordneten Zustand am Aufnahmeelement. Vorteilhafterweise sind die Klemmelement und die magnetischen Elemente eines Aufnahmeelements getrennt voneinander vorhanden. Insbesondere sind die Klemmelemente eines Aufnahmeelements relativ beweglich zu den magnetischen Elementen des Aufnahmeelements am Aufnahmeelement vorhanden.

Vorteilhafterweise ist das magnetische Element als ein Dauermagnet, z.B. als ein Ferromagnet ausgebildet. Beispielsweise ist das magnetische Element als ein Neodym-Eisen-Bor-Magnet vorhanden. Vorstellbar ist auch, dass das magnetische Element als ein Elektromagnet vorhanden ist. Bevorzugterweise ist das magnetische Element in einer Weise ausgebildet und/oder in einer Weise am Aufnahmeelement angeordnet, dass ein Längsdraht insbesondere ausschließlich durch das magnetische Element am Aufnahmeelement fixierbar ist.

Von Vorteil erweist sich ebenfalls, dass drei Aufnahmeelemente vorhanden sind. Hierdurch sind insbesondere vergleichsweise lange Längsdrähte für einen vergleichsweise großen und/oder langen Korb mittels der Einschubeinrichtung der Korbschweißmaschine zuführbar.

Vorteilhafterweise sind zumindest zwei der drei Aufnahmeelemente entlang der Drehachse der Einschubeinrichtung verschieblich gelagert. Denkbar ist, dass zwei der drei Aufnahmeelemente entlang der Drehachse der Einschubeinrichtung verschieblich gelagert sind und ein drittes Aufnahmeelement positionsfest vorhanden ist. Vorteilhafterweise sind alle Aufnahmeelemente entlang der Drehachse zueinander beweglich vorhanden.

Vorteilhafterweise sind zwei der drei Aufnahmeelemente insbesondere in einem Abstand entlang der Drehachse der Einschubeinrichtung positionsfest zueinander vorhanden. Bevorzugterweise sind zwei der drei Aufnahmeelemente drehfest miteinander verbunden. Insbesondere sind zwei der drei Aufnahmeelemente entlang der Drehachse in einem definierten Abstand miteinander verbunden. Beispielsweise zwei der drei Aufnahmeelemente miteinander gekoppelt und entlang der Drehachse der Einschubeinrichtung relativ zu einem dritten Aufnahmeelement beweglich, insbesondere verschieblich vorhanden. Vorteilhafterweise sind zwei der drei Aufnahmeelemente miteinander gekoppelt, wobei zumindest eines der zwei Aufnahmeelemente keine Klemmelemente umfasst. Denkbar ist auch, dass zwei der drei Aufnahmeelemente miteinander gekoppelt sind und nur ein einziges der zwei Aufnahmeelemente Klemmelemente aufweist. Vorstellbar ist auch, dass zwei der drei Aufnahmeelemente miteinander gekoppelt sind und ausschließlich das dritte Aufnahmeelemente Klemmelemente aufweist.

Von Vorteil erweist sich auch, dass im Falle, dass die Einschubeinrichtung zwei Aufnahmeelemente, insbesondere drei Aufnahmeelemente umfasst, zumindest zwei Aufnahmeelement zueinander verschieden ausgebildet sind. Vorstellbar ist zum Beispiel, dass an einem ersten Aufnahmeelement Klemmelemente angeordnet sind und an einem zweiten Aufnahmeelement keine Klemmelemente vorhanden sind. Vorteilhafterweise dient im Falle, dass mehrere Aufnahmeelement vorhanden sind und zwei der Aufnahmeelemente zueinander verschieden ausgebildet sind, eines der Aufnahmeelement zur reinen Lagerung und/oder Stützung angeordneter Längsdrähte entlang der Drehachse der Einschubeinrichtung. Denkbar ist beispielsweise im Falle, dass die Einschubeinrichtung drei Aufnahmeelemente umfasst, dass zwei Aufnahmeelemente gleichartig ausgebildet sind und ein drittes Aufnahmeelement zu den beiden anderen Aufnahmeelemente verschieden ausgebildet ist. Hierdurch ist die Einschubeinrichtung vergleichsweise kostengünstig ausgebildet.

Außerdem ist es von Vorteil, dass die Aufnahmeposition eine Aufnahmeöffnung zur Aufnahme eines Längsdraht umfasst, sodass der Längsdraht seitlich an die Einschubeinrichtung anordenbar ist. Beispielsweise ist die Aufnahmeöffnung der Aufnahmeposition an einem Umfangsbereich des Aufnahmeelements, z.B. am Mantel des Aufnahmeelements vorhanden. Zum Beispiel ist die Aufnahmeöffnung radial außen liegend zur Drehachse der Einschubeinrichtung

gesehen am Aufnahmeelement vorhanden. Denkbar ist auch, dass das Aufnahmeelement an einem äußeren Umfangsbereich Aufnahmeöffnungen der Aufnahmepositionen aufweist. Denkbar ist auch, dass die Aufnahmeöffnung derart am Aufnahmeelement ausgebildet ist, dass ein Längsdraht in einer radialen Richtung zur Drehachse der Einschubeinrichtung an die Aufnahmeposition anordenbar ist.

Ebenfalls erweist es sich von Vorteil, dass das Aufnahmeelement einen Zuführtrichter aufweist. Beispielsweise ist der Zuführtrichter in eine axiale Richtung abstehend am Aufnahmeelement vorhanden. Insbesondere ist im Bereich einer Aufnahmeposition ein Zuführtrichter ausgebildet. Der Zuführtrichter ist zum Beispiel trichterartig, insbesondere halbschalenartig trichterförmig ausgebildet. Vorteilhafterweise ist der Zuführtrichter derart ausgebildet und am Aufnahmeelement angeordnet, dass ein Längsdraht in Richtung der Aufnahmeöffnung der Aufnahmeposition geführt zuführbar ist. Vorteilhafterweise umfasst ein einziges Aufnahmeelement der Einschubeinrichtung einen Zuführtrichter. Beispielsweise umfasst ein insbesondere einziges Aufnahmeelement der Einschubeinrichtung mehrere Zuführtrichter. Zum Beispiel umfasst ein Aufnahmeelement der Einschubeinrichtung an jeder Aufnahmeposition jeweils einen Zuführtrichter.

Vorteilhafterweise ist das Aufnahmeelement mehrteilig ausgebildet. Beispielsweise umfasst das Aufnahmeelement mehrere Aufnahmeorgane, beispielsweise zwei oder drei Aufnahmeorgane. Ein Aufnahmeorgan ist beispielsweise als eine Kreisringscheibe, als eine Kreisscheibe, eine Ringscheibe und/oder als ein Ring ausgebildet. Vorteilhafterweise sind die Aufnahmeorgane um die Drehachse des Aufnahmeelements und/oder um die Drehachse der Einschubeinrichtung relativ zueinander drehbar vorhanden. Bevorzugterweise ist an einem ersten Aufnahmeorgan das magnetische Element angeordnet und an einem zweiten Aufnahmeorgan die Klemmelemente. Vorstellbar ist auch, dass ein drittes Aufnahmeorgan vorhanden ist, wobei am dritten Aufnahmeorgan ein magnetisches Element angeordnet ist. Beispielsweise ist der Zuführtrichter am ersten Aufnahmeorgan vorhanden.

Von Vorteil erweist sich ebenfalls, dass in axialer Richtung gesehen, das zweite Aufnahmeorgan zwischen dem ersten und dem dritten Aufnahmeorgan vorhanden ist. Beispielsweise sind die Klemmelemente positionsfest, insbesondere unbeweglich am zweiten Aufnahmeorgan befestigt. Beispielsweise sind die Klemmelemente um die Schwenkachsen der Klemmelemente schwenkbeweglich am zweiten Aufnahmeorgan gelagert. Zum Beispiel sind die magnetischen Elemente positionsfest, insbesondere unbeweglich am ersten und/oder dritten Aufnahmeorgan befestigt. Vorteilhafterweise erfolgt eine Schließbewegung und/oder eine Öffnungsbewegung der Klemmelemente aus der Öffnungsstellung in die Schließstellung und/oder umgekehrt durch eine Relativbewegung des zweiten Aufnahmeorgans zum ersten Aufnahmeorgan und/oder zum dritten Aufnahmeorgan, insbesondere durch eine gegenläufige Bewegung der beiden Aufnahmeorgane zueinander. Beispielsweise erfolgt eine Schließbewegung und/oder eine Öffnungsbewegung der Klemmelemente aus der Öffnungsstellung in die Schließstellung und/oder umgekehrt durch eine Drehbewegung des zweiten Aufnahmeorgans um die Drehachse des Aufnahmeorgans, insbesondere um die Drehachse der Einschubeinrichtung. Zum Beispiel sind das erste und das dritte Aufnahmeorgan drehfest miteinander verbunden.

Das zweite Aufnahmeorgan, welches die Klemmelemente umfasst ist vorteilhafterweise verschieden zum ersten und/oder zum dritten Aufnahmeorgan vorhanden. Vorteilhafterweise umfasst das zweite Aufnahmeorgan ein sternförmiges Element, an welchem die Klemmelemente ausgebildet sind. Das sternförmige Element ist beispielsweise als eine Kreisscheibe, insbesondere als eine Ringkreisschiebe vorhanden, an welcher die Klemmelemente in radialer Richtung abstehend angeordnet sind. Beispielsweise ist das sternförmige Element mit den Klemmelementen einteilig ausgebildet. Vorteilhafterweise umfasst das zweite Aufnahmeorgan neben dem sternförmigen Element ein Anschlagelement. Das Anschlagelement ist beispielsweise als eine insbesondere einzige Kreisschiebe, insbesondere als eine insbesondere einzige Ringkreisschiebe vorhanden. Vorteilhafterweise umfasst das Anschlagelement zwei Kreisscheiben und/oder zwei Ringkreisschieben. Vorteilhafterweise ist das sternförmige Element in axialer Richtung zwischen den beiden Kreisschieben und/oder zwischen den beiden Ringkreisscheiben am Aufnahmeelement vorhanden. Vorteilhafterweise ist das Aufnahmeelement und die Klemmelemente scheibenartig insbesondere ringscheibenartig ausgebildet. Beispielsweise ist das zweite Aufnahmeorgan radartig ausgebildet. Zum Beispiel ist das zweite Aufnahmeorgan drehbar zwischen dem ersten und dem dritten Aufnahmeorgan am ersten und dritten Aufnahmeorgan gelagert.

Vorteilhafterweise steht das sternförmige Element in der Schließstellung mit einem ersten Pufferelement an einer ersten Begrenzungsfläche des Anschlagselements an. Bevorzugterweise steht das sternförmige Element in der Offenstellung mit einem zweiten Pufferelement an einer zweiten Begrenzungsfläche des Anschlagselements an. Hierdurch sind im Durchmesser verschiedene Längsdrähte mit dem zweiten Aufnahmeorgan am ersten Aufnahmeorgan klemmbar.

In einer vorteilhaften Modifikation der Erfindung ist die Transportvorrichtung als ein Endlosaufzug, als ein Bandfördergerät, als ein Lift und/oder als ein Umlaufaufzug ausgebildet. Hierdurch ist eine Vereinzelung der Längsdrähte vor einer Zuführung der Längsdrähte an die Einschubeinrichtung ermöglicht. Dadurch ist eine Beladegeschwindigkeit zum Beladen der Einschubeinrichtung mit Längsdrähten durch die Zuführvorrichtung beschleunigt.

Vorteilhafterweise ist die Zuführungsvorrichtung derart ausgebildet, dass alle zur Herstellung eines Korbs erforderlichen Längsdrähte vor dem Bestückungsvorgang vereinzelt an der Zuführungsvorrichtung ablegbar sind. Hierdurch ist eine Beladegeschwindigkeit zum Beladen der Einschubeinrichtung mit Längsdrähten durch die Zuführvorrichtung beschleunigt.

Eine weitere vorteilhafte Ausführungsform der Erfindung ist eine Korbschweißmaschine, welche Halteelemente an Drahtzuführungsrohren der Korbschweißmaschine zur Klemmung der Längsdrähte aufweist. Beispielsweise umfasst die Korbschweißmaschine Halteelemente zur lösbaren Fixierung der Längsdrähte. Hierdurch ist eine vergleichsweise schnelle Zuführung von Längsdrähten durch eine Einschubeinrichtung, insbesondere durch einen Einschubeinrichtung nach einer der vorangegangen genannten Ausführungen, realisierbar. Bevorzugterweise sind die Halteelemente als pneumatische Klemmen, z.B. als Pneumatikklemmen ausgebildet. Die Drahtzuführungsrohre werden beispielsweise auch Drahtdurchführungsrohre genannte.

Eine weitere vorteilhafte Ausführungsform der Erfindung ist eine Korbschweißmaschine mit einer Vorrichtung nach einer der vorangegangen genannten Ausführungen, wobei die Korbschweißmaschine derart ausgebildet ist, dass die Drehachse D der Einschubvorrichtung, insbesondere die Welle der Einschubeinrichtung, an der Korbschweißmaschine lagerbar ist.

Beispielsweise umfasst die Korbschweißmaschine ein Achslagerungsorgan, sodass die Drehachse der Einschubvorrichtung an der Korbschweißmaschine am Achslagerungsorgan lagerbar ist. Vorteilhafterweise ist die Drehachse der Einschubvorrichtung am Achslagerungsorgan der Korbschweißmaschine anordenbar, sodass das Achslagerungsorgan die Drehachse abstützt.

Vorteilhafterweise fallen die Drehachse der Einschubeinrichtung und eine Drehachse der Korbschweißmaschine aufeinander. Beispielsweise liegen die Drehachse der Einschubeinrichtung und eine Drehachse der Korbschweißmaschine übereinander. Zum Beispiel ist die Welle der Einschubeinrichtung an einem Drehlager des Hauptrads der Korbschweißmaschine gelagert. Vorteilhafterweise ist die Welle der Einschubeinrichtung mit dem Hauptrad der Korbschweißmaschine verbunden.

In einer vorteilhaften Ausführungsform der Erfindung ist die Einschubeinrichtung nach einer der vorangegangen genannten Ausführungsformen Bestandteil der Korbschweißmaschine, wobei die Einschubeinrichtung eine Antriebswelle und eine Antriebsvorrichtung zum Antrieb der Stellelemente der Korbschweißmaschine umfasst. Bevorzugterweise ist die Antriebswelle innerhalb der Welle der Einschubeinrichtung und/oder innerhalb des schienenartigen Führungsorgans der Einschubeinrichtung vorhanden. Die Welle und/oder das schienenartige Führungsorgan der Einschubeinrichtung ist vorteilhafterweise in der Form eines Vierkantrohrs vorhanden. Die Welle ist beispielsweise als ein gezogenes Vierkantrohr ausgebildet. Vorteilhafterweise umfasst die Welle das schienenartige Führungsorgan.

Von Vorteil erweist sich außerdem, dass an der Korbschweißmaschine eine Führungsvorrichtung zur Führung eines Drahtführungsrohrs der Korbschweißmaschine vorhanden ist.

Das Drahtführungsrohr dient zur vergleichsweise einfachen und produktionssicheren Bestückung der Korbschweißmaschine mit einem Längsdraht und gleichzeitig zur Führung und Stützung des Längsdrahts währen der Produktion des Korbs durch die Korbschweißmaschine. Beispielsweise ist ein Halteelement an einem Drahtführungsrohr ausgebildet.

Die Führungsvorrichtung umfasst vorteilhafterweise in radialer Richtung zur Drehachse der Korbschweißmaschine sich erstreckende Führungsschlitze, wobei in jedem Führungsschlitz ein Drahtführungsrohr in radialer Richtung beweglich gelagert ist. Hierdurch ist eine umfängliche Beabstandung der Drahtführungsrohre zueinander, um die Drehachse der Korbschweißmaschine herum, gewährleistet. Beispielsweise ist die Führungsvorrichtung scheibenartig und/oder radartig ausgebildet. Zum Beispiel ist die Führungsvorrichtung in Form einer Kreisscheibe und/oder in Form eines Rads ausgebildet. Denkbar ist, dass die Führungsschlitze speichenartig, z.B. als Speichen ausgebildet sind. Bevorzugterweise ist die Führungsvorrichtung in axialer Richtung der Drehachse der Korbschweißmaschine beabstandet zum Spreizrad der Korbschweißmaschine an der Korbschweißmaschine vorhanden.

Offenbart wird auch ein Verfahren zur Bestückung einer Korbschweißmaschine mit Längsdrähten durch eine Einschubeinrichtung, wobei das Verfahren folgende nacheinander auszuführende Verfahrensschritte aufweist:
- Verfahren eines Aufnahmeelements der Einschubeinrichtung in axialer Richtung der Drehachse der Einschubeinrichtung in Richtung Spreizrad der Korbschweißmaschine,
- Fixieren der Längsdrähte durch ein weiteres Aufnahmeelement und/oder durch die Korbschweißmaschine,
- Verfahren des Aufnahmeelements der Einschubeinrichtung in axialer Richtung der Drehachse der Einschubeinrichtung vom Spreizrad der Korbschweißmaschine weg,
- Fixieren der Längsdrähte durch das Aufnahmeelement,
- Lösen der Fixierung der Längsdrähte durch das weitere Aufnahmeelement und/oder Lösen der Fixierung der Längsdrähte durch die Korbschweißmaschine,
- Verfahren des Aufnahmeelements der Einschubeinrichtung in axialer Richtung der Drehachse der Einschubeinrichtung in Richtung Spreizrad der Korbschweißmaschine.

Vorteilhafterweise erfolgt vor dem vorangegangen genannten Bestückungsverfahren ein Bestücken der Einschubeinrichtung mit einer Anzahl an Längsdrähten, welche zur Herstellung eines Korbs durch die Korbschweißmaschine erforderlich ist.

### Beschreibung eines Ausführungsbeispiels

Ein Ausführungsbeispiel wird anhand der nachstehenden schematischen Zeichnungen unter Angabe weiterer Einzelheiten und Vorteile näher erläutert.

Es zeigen:
- Figur 1: eine schematische Darstellung einer Vorrichtung in einer seitlichen Ansicht in Richtung einer Drehachse der Vorrichtung,
- Figur 2: eine schematische Darstellung einer Korbschweißmaschine mit einer angeordneten Vorrichtung in einer seitlichen Ansicht quer zur Drehachse der Vorrichtung,
- Figur 3: eine Teilansicht von schräg seitlich oben auf die Vorrichtung,
- Figur 4: eine Querschnittsansicht eines Teilausschnitts von schräg seitlich vorne auf die Vorrichtung,
- Figur 5: eine Teilansicht von schräg seitlich hinten auf eine Korbschweißmaschine mit angeordneter Vorrichtung,
- Figur 6: eine Ansicht von schräg seitlich vorne auf ein Drahtführungsrohr,
- Figur 7: eine Ansicht von schräg seitlich vorne auf eine Führungsvorrichtung,
- Figur 8: eine Teilansicht auf ein Aufnahmeelement der Vorrichtung,
- Figur 9: einen vergrößerter Ausschnitt A des Aufnahmeelements gemäß Figur 8,
- Figuren 10 bis 12: jeweils eine Ansicht auf einen Ausschnitt eines Aufnahmeelements aus einer Sicht in axialer Richtung, wobei jeweils Elemente des Aufnahmeelements zum leichteren Verständnis ausgeblendet sind und
- Figur 13: eine schematische Darstellung einer Korbschweißmaschine mit einer angeordneten Vorrichtung in unterschiedlichen Positionen.

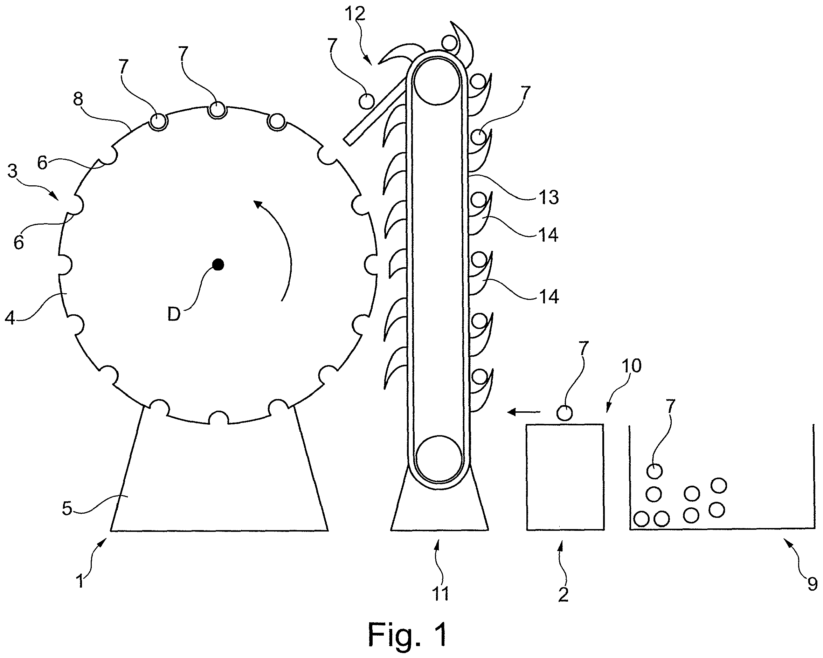

In Figur 1 ist eine Vorrichtung umfassend eine Einschubeinrichtung 1 und z.B. eine Zuführvorrichtung 2 gezeigt.

Die Einschubeinrichtung 1 umfasst beispielsweise eine Bestückerwalze 3, welche z.B. ein Aufnahmeelement beispielsweise in Form eines Sammelrads 4 umfasst. Vorteilhafterweise bilden die Aufnahmeelemente, z.B. die Sammelräder 4 die Bestückerwalze 3. Das Sammelrad 4 ist vorteilhafterweise um eine Drehachse D der Einschubeinrichtung 1 drehbar z.B. an einem Stützfuß 5 gelagert. Beispielsweise umfasst der Stützfuß 5 Rollen, auf welchen das Sammelrad 4 drehbar gelagert ist. Am Sammelrad 4 sind Aufnahmepositionen 6 zur Aufnahme von Längsdrähten 7 ausgebildet. Die Aufnahmepositionen 6 sind an einer umfänglichen Außenseite 8, z.B. einer Mantelfläche, des Sammelrads 4 ausgebildet, sodass die Einschubeinrichtung 1 von der Seite mit Längsdrähten 7 bestückbar ausgebildet ist.

Die Zuführvorrichtung 2 umfasst beispielsweise ein Vorratsgestell 9, eine Vereinzelungseinrichtung 10, eine Transportvorrichtung 11 und/oder eine Übergabevorrichtung 12. Das Vorratsgestell 9 ist beispielsweise als eine Wanne ausgebildet, in welcher Längsdrähte 7 gesammelt als Vorrat lagerbar sind. Die Vereinzelungseinrichtung 10 ist ausgebildet, die Längsdrähte 7 dem Vorratsgestell 9 zu entnehmen und einzeln, insbesondere nacheinander der Transportvorrichtung 11 zuzuführen. Die Transportvorrichtung 11 ist beispielsweise als ein Bandfördergerät mit einem Band 13 und mehreren Mitnahmeelementen 14 ausgebildet. Beispielsweise sind an der Transportvorrichtung 11 eine für eine Herstellung eines Korbs erforderliche Anzahl an Längsdrähten 7 separiert voneinander, z.B. vereinzelt an den Mitnahmeelementen 14 lagerbar. Die Übergabevorrichtung 12 ist vorteilhafterweise als eine Rutsche ausgebildet, entlang welcher die von der Transportvorrichtung 11 an die Übergabevorrichtung 12 abgegebenen Längsdrähte 7 in Richtung einer Aufnahmeposition 6 des Sammelrads 4 rutschen können.

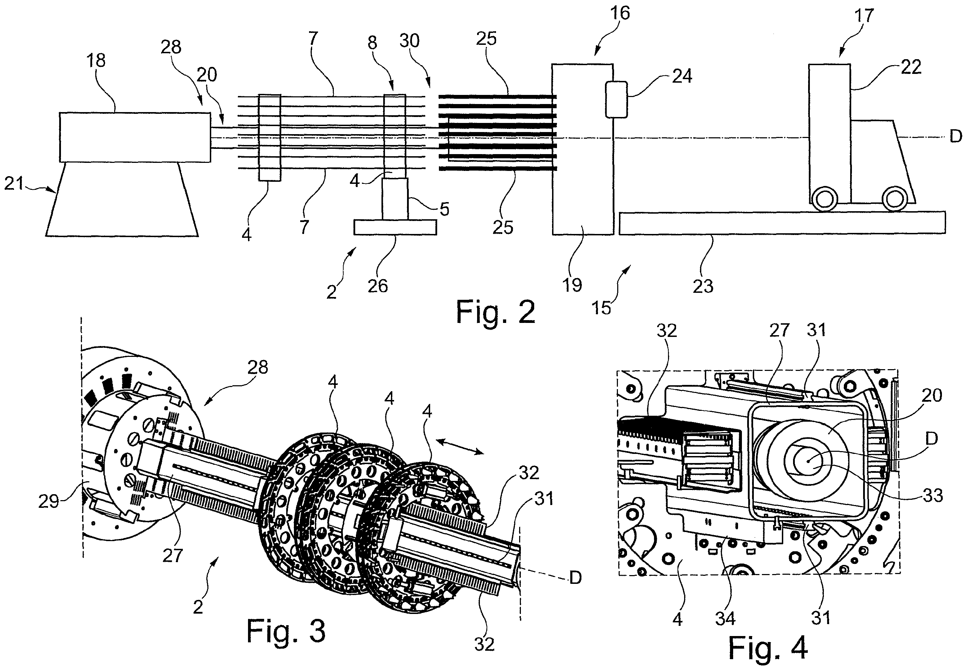

In Figur 2 ist die Einschubeinrichtung 1 im angeordneten Zustand an einer Korbschweißmaschine 15 gezeigt. Die Korbschweißmaschine 15 zur Herstellung eines Bewehrungskorbs besitzt z.B. ein Hauptrad 16, einen Vorschubwagen in Form eines Transportwagens 17 und einen Spreizantrieb 18. Das Hauptrad 16 ist beispielsweise an einem Hauptrahmen 19, insbesondere positionsfest zum Hauptrahmen 19 befestigt. Des Weiteren umfasst die Korbschweißmaschine 15 beispielsweise eine Spreizwelle 20, welche mit einem Spreizbock 21 gekoppelt ist, wobei beispielsweise am Spreizbock 21 der Spreizantrieb 18 angeordnet ist. Der Transportwagen 17 umfasst ein Vorschubrad 22 und ist auf Führungsschienen 23 linear verfahrbar gelagert. Das Hauptrad 16 ist beispielsweise als ein Spreizrad vorhanden. Am Hauptrahmen 19 ist beispielsweise eine Schweiß- und/oder Bindeeinheit 24 zum Verbinden eines Längsdrahts 7 mit einem Querdraht (nicht gezeigt) angeordnet. Am Hauptrad 16 sind vorteilhafterweise Drahtführungsrohre 25 angeordnet. Beispielsweise ist am Hauptrahmen 19 eine Antriebsvorrichtung zum Antrieb des Hauptrads 16 ausgebildet. Beispielsweise treibt der Antrieb am Hauptrahmen 19 eine Drehbewegung des Hauptrads 16 um eine Drehachse des Hauptrads 16 an.

Vorteilhafterweise ist zumindest ein Sammelrad 4 der Einschubeinrichtung 1 über einen Stützfuß 5 an einem Führungselement, welches z.B. als eine Führungsschiene 26 ausgebildet ist, verschieblich gelagert und/oder abgestützt.

In Figur 3 ist ausschnittsweise und vergrößert eine Welle 27 der Einschubeinrichtung 1 gezeigt. Auf der Welle 27 sind beispielsweise drei Sammelräder 4 entlang einer axialen Richtung der Drehachse D der Einschubeinrichtung 1 beweglich gelagert. Die Welle 27 ist an einem zweiten Ende 28 mit einem Antrieb 29 der Einschubeinrichtung 1 gekoppelt. Beispielsweise ist die Welle 27 an einem ersten Ende 30 insbesondere beweglich an der Korbschweißmaschine 15, insbesondere am Hauptrad 16 gelagert.

An der Welle 27 ist vorteilhafterweise ein Führungsorgan, z.B. in Form einer Führungsschiene 31, befestigt, welche sich entlang der Drehachse D der Einschubeinrichtung 1 erstreckt. Ebenfalls ist beispielsweise an der Welle 27 ein Zahnriemengetriebe 32 angeordnet, welches sich entlang der Drehachse D der Einschubeinrichtung 1 erstreckt. Denkbar ist außerdem, dass ein Sammelrad 4 mittels einer Zahnstange und einem Getriebemotor angetrieben vorhanden ist. Vorteilhafterweise sind die Sammelräder 4 durch die Führungsschiene 31 geführt vorhanden. Beispielsweise sin die Sammelräder 4 angetrieben vorhanden. Vorteilhafterweise sind die Sammelräder 4 unabhängig voneinander durch das Zahnriemengetriebe 32 und/oder mittels eines Zahnstangengetriebes antreibbar ausgebildet.

In Figur 4 ist die Welle 27 in einem Querschnitt, quer zur Drehachse D der Einschubeinrichtung 1 gezeigt. Die Welle 27 ist vorteilhafterweise als ein Vierkantrohr ausgebildet. Bevorzugterweise ist in einem Inneren der als Vierkantrohr ausgebildeten Welle 27 die Spreizwelle 20 und z.B. eine Antriebsstange 33 und/oder eine Antriebswelle zum Antrieb des Hauptrads 16 der Korbschweißmaschine 15 angeordnet. Beispielsweise ist an der Welle 27 eine Positionseinheit 34, z.B. in Form einer Strichplatte, Gitterplatte und/oder eines Glasmaßstabs, zur Bestimmung einer Position der Sammelräder 4 relativ zu einem Nullpunkt und/oder in Form einer Zahnstange vorhanden.

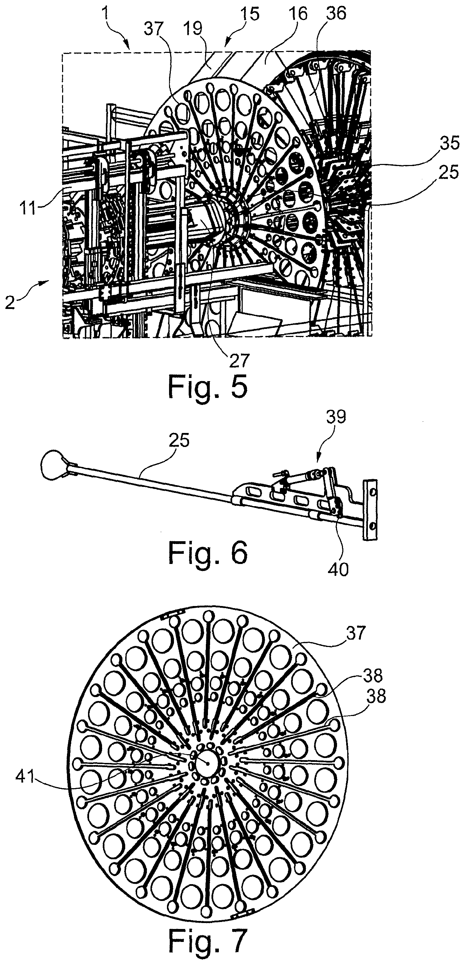

Figur 5 zeigt in einem Teilausschnitt eine an die Korbschweißmaschine 15 angeordnete Vorrichtung umfassend die Einschubeinrichtung 1 und die Zuführvorrichtung 2. In Figur 5 gezeigt ist das Hauptrad 16 der Korbschweißmaschine 15, welches am Hauptrahmen 19 insbesondere drehbar gelagert ist. Am Hauptrad 16 sind Drahtführungsrohre 25 in radialer Richtung zur Drehachse D der Einschubeinrichtung und/oder in radialer Richtung zur Korbschweißmaschinendrehachse befestigt. Die Drahtführungsrohre 25 sind über Spreizschieber der Korbschweißmaschine 15, welche mittels der Spreizwelle 20 antreibbar sind, zusammen mit Stellelementen 35 des Hauptrads 16 in radialer Richtung entlang von Speichen 36 des Hauptrads 16 beweglich vorhanden.

Vorteilhaft ist außerdem, dass zusätzlich eine Führungsvorrichtung in Form eines Führungsrads 37 vorhanden ist, wobei die Drahtführungsrohre 25 entlang von Führungsschlitzen 38 linearbeweglich geführt gelagert sind. Bevorzugterweise ist das Führungsrad 37 drehbeweglich an der Korbschweißmaschine 15 vorhanden. Beispielsweise ist das Führungsrad 37 mittels einer Antriebswelle, insbesondere gemeinsam mit dem Hauptrad 16 antreibbar vorhanden. Das Führungsrad 37 ist beispielsweise um eine Drehachse 41 des Führungsrads 37 drehbar an der Korbschweißmaschine 15 anordenbar (Figur 7).

An einem Drahtführungsrohr 25 ist vorteilhafterweise ein insbesondere pneumatisch antreibbares Halteelement 39 vorhanden. Mittels des Halteelements 39 ist ein an das Drahtführungsrohr 25 angeordneter Längsdraht 7 vorteilhafterweise lösbar fixierbar. Beispielsweise umfasst das Halteelement 39 einen Stempel 40, welcher in einem Haltezustand des Halteelements 39 den Längsdraht 7 gegen eine Innenwand des Drahtführungsrohrs 25 klemmt (Figur 6).

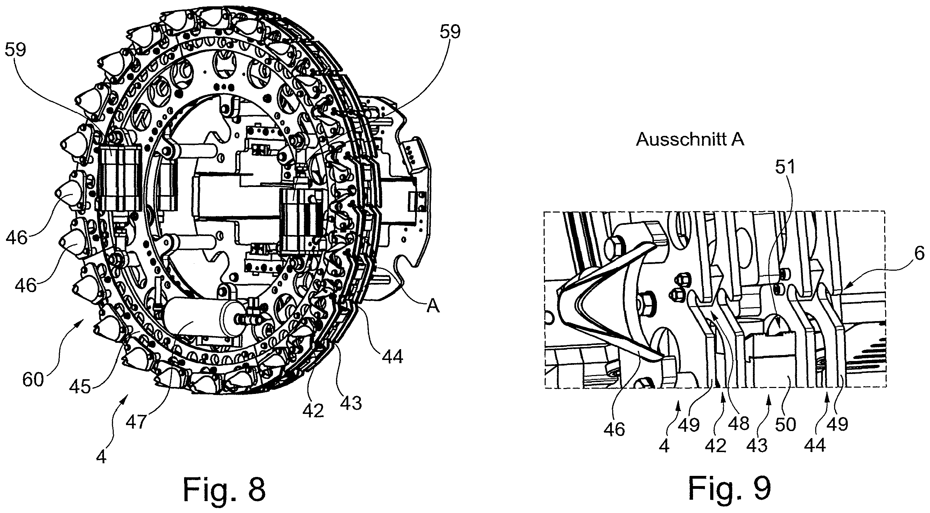

Figur 8 zeigt ein Sammelrad 4, wobei Teile des Sammelrads 4 zum besseren Verständnis ausgeblendet sind. Das Sammelrad 4 umfasst beispielsweise drei Aufnahmeorgane 42, 43, 44. Beispielsweise sind an einer Außenseite 45 eines ersten Aufnahmeorgans 42 in axialer Richtung abstehend Zuführtrichter 46 ausgebildet. Außerdem umfasst das Sammelrad 4 beispielsweise eine Antriebseinheit 60 umfassend einen Pufferspeicher in Form eines Drucktanks 47 und einen pneumatischen Antrieb in Form eines Pneumatikzylinders 59.

Am ersten und z.B. an einem dritten Aufnahmeorgan 42, 44 sind vorteilhafterweise schlitzartige Aufnahmepositionen 6 vorhanden, welche eine Aufnahmeöffnung 48 aufweisen. Die Aufnahmeöffnungen 48 sind vorteilhafterweise an einer Mantelfläche 49 des ersten und des dritten Aufnahmeorgans 42, 44 vorhanden. Das zweite Aufnahmeorgan 43 ist beispielsweise zum ersten und zum dritten Aufnahmeorgan 42, 44 verschieden ausgebildet. Das zweite Aufnahmeorgan 43 umfasst beispielweise ein Klemmelement 50 mit einer Klemmfläche 51.

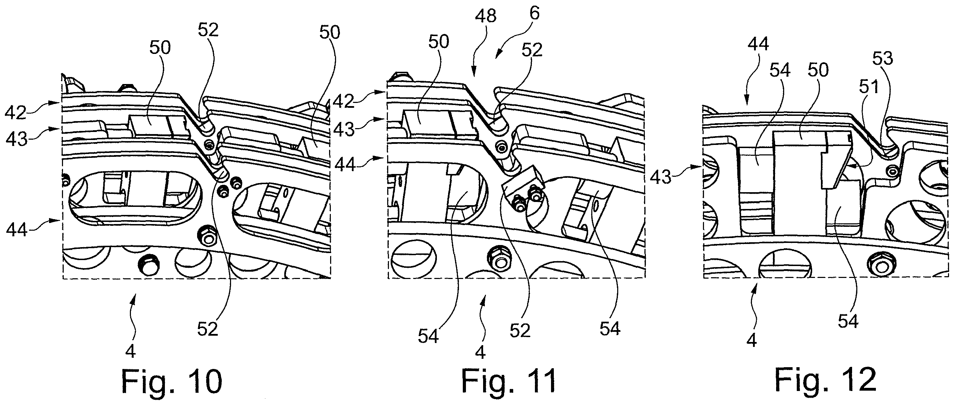

In den Figuren 10 bis 12 ist ein weitere Ausschnitt des Sammelrads 4 gezeigt, wobei in den Figuren 11 und 12 jeweils Teile des dritten Aufnahmeorgans 44 ausgeblendet sind. Am ersten und dritten Aufnahmeorgan 42, 44 sind im Bereich der Aufnahmepositionen 6 magnetische Elemente in Form von Permanentmagneten 52 ausgebildet. Die Aufnahmepositionen 6 umfassen außerdem vorteilhafterweise Auflageflächen 53, in welchen die Längsdrähte 7 lagerbar sind und gegen welche ein Längsdraht 7 in einer Schließstellung des Klemmelements 50 durch die Klemmfläche 51 gedrückt und damit fixiert wird. Am Klemmelement 50 sind vorteilhafterweise Pufferelemente 54 angeordnet, mittels welchen ein Dimensionsunterschied der am Sammelrad 4 angeordneten Längsdrähte 7 ausgleichbar ist, insbesondere im Durchmesser. Eine Klemmung eines Längsdrahts 7 erfolgt vorteilhafterweise durch eine Relativbewegung, insbesondere durch eine Drehung des zweiten Aufnahmeorgans 43 relativ zu dem ersten und dem zweiten Aufnahmeorgan 42, 44. Die Relativbewegung ist beispielsweise durch eine Hubbewegung des Pneumatikzylinders 59 verursacht.

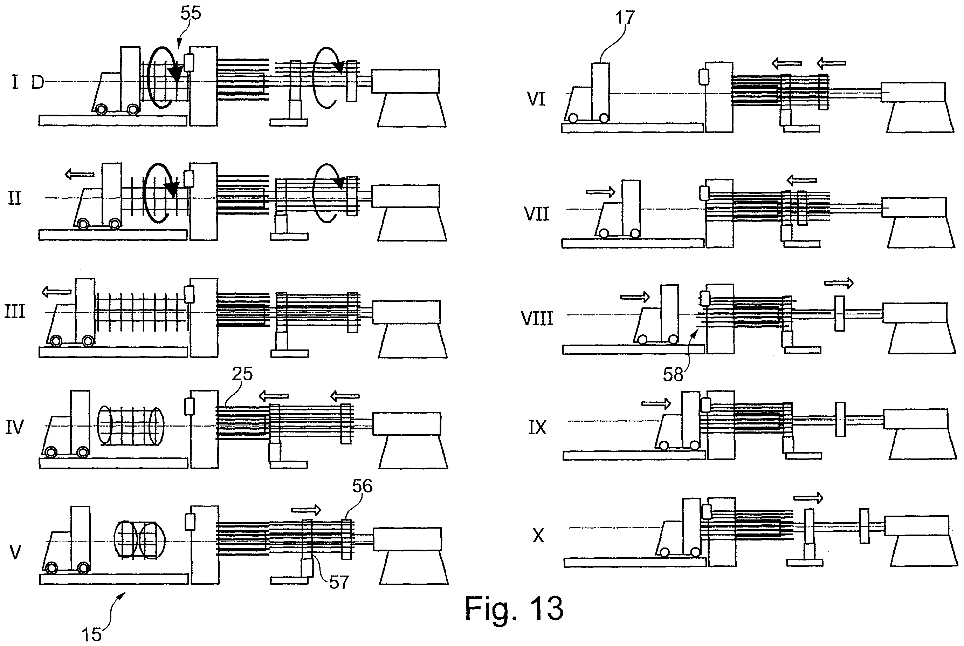

In Figur 13 ist ein möglicher Verfahrensablauf zur Bestückung einer Korbschweißmaschine 15 durch eine Einschubeinrichtung 1 gezeigt. Beispielsweise sind weitere insbesondere andere Verfahrensabläufe zur Bestückung der Korbschweißmaschine 15 nicht ausgeschlossen. Die Einschubeinrichtung 1 gemäß Figur 13 umfasst zwei Sammelräder 56, 57.

Im Folgenden wird der in Figur 13 gezeigte Verfahrensablauf erläutert:
Zunächst wird in einem ersten Verfahrensschritt (Abbildung I, Figur 13) die Einschubeinrichtung 1 mit Längsdrähten 7 bestückt. Hierbei ist die Zuführvorrichtung (nicht gezeigt) vorteilhafterweise ortsfest vorhanden und bestückt immer am gleichen Ort. Vielmehr drehen die Sammelräder der Einschubeinrichtung 1 die Aufnahmepositionen 6 um die Drehachse D der Einschubeinrichtung 1 um eine Position weiter, sobald eine Aufnahmeposition 6 mit einem Längsdraht 7 bestückt ist (Abbildung II, Figur 13). Während der Bestückung der Einschubeinrichtung 1 erfolgt vorteilhafterweise die Produktion eines Korbs 55 durch die Korbschweißmaschine 15.

In einem weiteren Verfahrensschritt (Abbildung III, Figur 13) ist die Produktion des Korbs 55 durch die Korbschweißmaschine beendet und insbesondere zeitgleich mit Beendigung der Produktion werden die Sammelräder mit den Längsdrähten 7 an das Hauptrad 16 entlang der Drehachse D der Einschubeinrichtung 1 herangefahren.

Während der Bestückung der Korbschweißmaschine 15 mit Längsdrähten 7 wird vorteilhafterweise der bereits produzierte Korb 55 entnommen (Abbildungen III-V, Figur 13)
Sind die Sammelräder soweit an das Hauptrad 16 der Korbschweißmaschine 15 herangefahren, dass die Längsdrähte 7 in die Drahtführungsrohre 25 zumindest teilweise eingeführt vorhanden sind, klemmt beispielsweise ein zweites Sammelrad 56 die Längsdrähte 7, sodass ein erstes Sammelrad 57 entlang der Drehachse D zurückfahren kann (Abbildung V, Figur 13). Denkbar ist auch, dass das erste Sammelrad 57 stehen bleibt, ggf. eine Fixierung der Längsdrähte 7 löst und das zweite Sammelrad 56 die Längsdrähte 7 in Richtung Korbschweißmaschine 15 weitertransportiert.

Ist das erste Sammelrad 57 zurückgefahren fixieren vorteilhafterweise beide Sammelräder 56, 57 die Längsdrähte 7 und transportieren in einem nächsten Schritt die Längsdrähte 7 entlang der Drehachse D weiter in Richtung Korbschweißmaschine 15 (Abbildung VI, Figur 13).

Sobald das erste Sammelrad 57 maximal an die Korbschweißmaschine 15 herangefahren ist, wird ggf. eine Fixierung der Längsdrähte 7 am ersten Sammelrad 57 gelöst und das zweite Sammelrad 56 transportiert die Längsdrähte 7 in Richtung Korbschweißmaschine 15 weiter bis auch das zweite Sammelrad 56 eine maximal an die Korbschweißmaschine 15 heranfahrbare Position erreicht hat (Abbildung VII, Figur 13). Anschließend löst das zweite Sammelrad 56 eine Fixierung der Längsdrähte 7.

In einem weiteren Verfahrensschritt wird das zweite Sammelrad 56 in eine Bestückungsposition zum erneuten Bestücken mit Längsdrähten 7 zurückgefahren. Insbesondere gleichzeitig wird der Transportwagen 17 an die an die Korbschweißmaschine 15 eingebrachten Längsdrähte 7 herangeführt (Abbildung VIII, Figur 13) .

Hierbei schiebt der Transportwagen 17 die Längsdrähte 7 entlang der Drehachse D zurück in Richtung erstem Sammelrad 57, bis Enden 58 der Längsdrähte 7 gleich weit in Richtung Transportwagen 17 in die Korbschweißmaschine 15 eingebracht vorhanden sind (Abbildung IX, Figur 13). Anschließend fixiert das erste Sammelrad 57 die Längsdrähte 7, sodass ohne Veränderung einer Position der Längsdrähte entlang der Drehachse D der Transportwagen 17 die Längsdrähte an den Enden 58 greifen kann. Hat der Transportwagen 17 die Längsdrähte 7 an ihren Enden 58 fixiert, löst das erste Sammelrad 57 die Fixierung mit den Längsdrähten 7 und wird auf eine Bestückungsposition zum erneuten Bestücken mit Längsdrähten 7 zurückgefahren (Abbildung X, Figur 13).

### Bezugszeichenliste

| | | | |
|---|---|---|---|
| 1 | Einschubeinrichtung | 31 | Führungsschiene |
| 2 | Zuführvorrichtung | 32 | Zahnriemengetriebe |
| 3 | Bestückerwalze | 33 | Antriebsstange |
| 4 | Sammelrad | 34 | Positionseinheit |
| 5 | Stützfuß | 35 | Stellelement |
| 6 | Aufnahmeposition | 36 | Speiche |
| 7 | Längsdraht | 37 | Führungsrad |
| 8 | Außenseite | 38 | Führungsschlitz |
| 9 | Vorratsgestell | 39 | Halteelement |
| 10 | Vereinzelungseinrichtung | 40 | Stempel |
| 11 | Transportvorrichtung | 41 | Drehachse |
| 12 | Übergabevorrichtung | 42 | Aufnahmeorgan |
| 13 | Band | 43 | Aufnahmeorgan |
| 14 | Mitnahmeelement | 44 | Aufnahmeorgan |
| 15 | Korbschweißmaschine | 45 | Außenseite |
| 16 | Hauptrad | 46 | Zuführtrichter |
| 17 | Transportwagen | 47 | Drucktank |
| 18 | Spreizantrieb | 48 | Aufnahmeöffnung |
| 19 | Hauptrahmen | 49 | Mantelfläche |
| 20 | Spreizwelle | 50 | Klemmelement |
| 21 | Spreizbock | 51 | Klemmfläche |
| 22 | Vorschubrad | 52 | Permanentmagnet |
| 23 | Führungsschienen | 53 | Auflagefläche |
| 24 | Schweiß- und/oder Bindeeinheit | 54 | Pufferelement |
| | | 55 | Korb |
| 25 | Drahtführungsrohr | 56 | Sammelrad |
| 26 | Führungsschiene | 57 | Sammelrad |
| 27 | Welle | 58 | Ende |
| 28 | Ende | 59 | Pneumatikzylinder |
| 29 | Antrieb | 60 | Antriebseinheit |
| 30 | Ende | | |

## Patentansprüche

1. Vorrichtung zur Bestückung einer Korbschweißmaschine (15), wobei die Vorrichtung eine Einschubeinrichtung (1) aufweist, wobei die Einschubeinrichtung (1) ein Aufnahmeelement (4) zur Aufnahme von Längsdrähten (7) eines mit der Korbschweißmaschine (15) herzustellenden Korbs (55) aufweist, wobei die Einschubeinrichtung (1) eine Vielzahl von Aufnahmepositionen (6) für alle Längsdrähte (7) des Korbs (55) an dem Aufnahmeelement (4) besitzt, wobei die Aufnahmepositionen (6) in radialer Richtung beabstandet zu einer Drehachse D der Einschubeinrichtung (1) vorhanden sind, wobei die Einschubeinrichtung (1) dazu ausgebildet ist, der Korbschweißmaschine (15) in einem Einschubvorgang mindestens zwei an die Einschubeinrichtung (1) angeordnete Längsdrähte (7) gleichzeitig zuzuführen, wobei der Einschubvorgang der Längsdrähte (7) an die Korbschweißmaschine (15) durch eine Bewegung der Einschubeinrichtung (1) in axialer Richtung der Drehachse D der Einschubeinrichtung (1) erfolgt, **dadurch gekennzeichnet, dass** zwei Aufnahmeelemente (4) vorhanden sind, wobei die Aufnahmeelemente (4) die Aufnahmepositionen (6) umfassen, wobei die zwei Aufnahmeelemente (4) in einer axialen Richtung zur Drehachse D der Einschubeinrichtung (1) verschieblich vorhanden sind.

2. Vorrichtung zur Bestückung einer Korbschweißmaschine (15) nach dem Anspruch 1, **dadurch gekennzeichnet, dass** die Vorrichtung eine Zuführvorrichtung (2) aufweist, wobei die Zuführvorrichtung (2) ein Vorratsgestell (9), eine Vereinzelungseinrichtung (10), eine Transportvorrichtung (11) und/oder eine Übergabevorrichtung (12) aufweist und dazu ausgebildet ist, Längsdrähte (7) der Einschubeinrichtung (1) zuzuführen, wobei die Einschubeinrichtung (1) durch eine Bewegung des Längsdrahts (7) in einer Richtung quer zur Drehachse D der Einschubeinrichtung (1) mit dem Längsdraht (7) bestückbar ausgebildet ist und die Zuführvorrichtung (2) die Einschubeinrichtung (1) von der Seite bestückt.

3. Vorrichtung zur Bestückung einer Korbschweißmaschine (15) nach einem der vorangegangenen Ansprüche, **dadurch gekennzeichnet, dass** ein Aufnahmeelement (4) ein Stützelement (5) aufweist, wobei das Aufnahmeelement (4) am Stützelement (5) drehbar gelagert ist.

4. Vorrichtung zur Bestückung einer Korbschweißmaschine (15) nach einem der vorangegangenen Ansprüche, **dadurch gekennzeichnet, dass** ein Aufnahmeelement (4) Klemmelemente (50) umfasst, wobei die Klemmelemente (50) zur Klemmung der am Aufnahmeelement (4) gelagerten Längsdrähte (7) ausgebildet sind.

5. Vorrichtung nach einem der vorangegangenen Ansprüche, **dadurch gekennzeichnet, dass** die Einschubeinrichtung (1) eine Welle (27) aufweist, wobei die Welle (27) und zumindest ein Aufnahmeelement (4) rotationsfest miteinander verbunden sind, sodass eine Drehbewegung der Welle (27) eine Drehbewegung des Aufnahmeelements (4) verursacht.

6. Vorrichtung nach einem der vorangegangenen Ansprüche, **dadurch gekennzeichnet, dass** im Bereich der Aufnahmeposition (6) ein magnetisches Element (52) zur magnetischen Halterung eines an einem Aufnahmeelement (4) angeordneten Längsdrahts (7) vorhanden ist.

7. Vorrichtung nach einem der vorangegangenen Ansprüche, **dadurch gekennzeichnet, dass** drei Aufnahmeelemente (4) vorhanden sind.

8. Vorrichtung nach einem der vorangegangenen Ansprüche, **dadurch gekennzeichnet, dass** die Aufnahmeposition (6) eine Aufnahmeöffnung (48) zur Aufnahme eines Längsdraht (7) umfasst, sodass der Längsdraht (7) seitlich an die Einschubeinrichtung (1) anordenbar ist.

9. Vorrichtung nach einem der vorangegangenen Ansprüche, **dadurch gekennzeichnet, dass** die Transportvorrichtung (11) als ein Endlosaufzug ausgebildet ist.

10. Vorrichtung nach einem der vorangegangenen Ansprüche, **dadurch gekennzeichnet, dass** an einem Aufnahmeelement der Einschubeinrichtung ein Pufferspeicher derart angeordnet ist, dass der Pufferspeicher am Aufnahmeelement zusammen mit weiteren Elementen des Aufnahmeelements um die Drehachse D der Einschubeinrichtung drehbar vorhanden ist, wobei der Pufferspeicher als ein Tank ausgebildet ist.

11. Korbschweißmaschine (15) mit einer Vorrichtung zur Bestückung der Korbschweißmaschine (15) nach einem der vorangegangenen Ansprüche 1 bis 10, **dadurch gekennzeichnet, dass** die Drehachse D der Einschubvorrichtung (1) an der Korbschweißmaschine (15) gelagert ist.

12. Korbschweißmaschine (15) nach dem Anspruch 11, **dadurch gekennzeichnet, dass** Halteelemente (39) an Drahtzuführungsrohren (25) der Korbschweißmaschine (15) zur Klemmung der Längsdrähte (7) vorhanden sind.

13. Korbschweißmaschine (15) nach dem Anspruch 11 oder 12, **dadurch gekennzeichnet, dass** an einem Vorschubrad der Korbschweißmaschine ein Pufferspeicher derart angeordnet ist, dass der Pufferspeicher am Vorschubrad zusammen mit weiteren Elementen des Vorschubrads um eine Drehachse der Korbschweißmaschine drehbar vorhanden ist, wobei der Pufferspeicher als ein Tank ausgebildet ist.

## Claims

1. Apparatus for loading a cage welding machine (15), wherein the apparatus has an insertion device (1), wherein the insertion device (1) has a receiving element (4) for receiving longitudinal wires (7) of a cage (55) to be produced using the cage welding machine (15), wherein the insertion device (1) has, on the receiving element (4), a multiplicity of receiving positions (6) for all the longitudinal wires (7) of the cage (55), wherein the receiving positions (6) are present in a radial direction so as to be spaced apart from an axis of rotation D of the insertion device (1), wherein the insertion device (1) is configured to simultaneously feed at least two longitudinal wires (7) arranged on the insertion device (1) to the cage welding machine (15) in an insertion operation, wherein the operation of inserting the longitudinal wires (7) onto the cage welding machine (15) is effected by a movement of the insertion device (1) in an axial direction of the axis of rotation D of the insertion device (1), **characterized in that** two receiving elements (4) are present, wherein the receiving elements (4) comprise the receiving positions (6), wherein the two receiving elements (4) are displaceable in an axial direction with respect to the axis of rotation D of the insertion device (1).

2. Apparatus for loading a cage welding machine (15) according to Claim 1, **characterized in that** the apparatus has a feed apparatus (2), wherein the feed apparatus (2) has a supply frame (9), a separating device (10), a transport apparatus (11) and/or a transfer apparatus (12) and is configured to feed longitudinal wires (7) to the insertion device (1), wherein the insertion device (1) is configured to be able to be loaded with the longitudinal wire (7) by a movement of the longitudinal wire (7) in a direction transverse to the axis of rotation D of the insertion device (1), and the feed apparatus (2) loads the insertion device (1) from the side.

3. Apparatus for loading a cage welding machine (15) according to either of the preceding claims, **characterized in that** a receiving element (4) has a support element (5), wherein the receiving element (4) is rotatably mounted on the support element (5).

4. Apparatus for loading a cage welding machine (15) according to one of the preceding claims, **characterized in that** a receiving element (4) comprises clamping elements (50), wherein the clamping elements (50) are configured to clamp the longitudinal wires (7) mounted on the receiving element (4).

5. Apparatus according to one of the preceding claims, **characterized in that** the insertion device (1) has a shaft (27), wherein the shaft (27) and at least one receiving element (4) are connected to one another in a rotationally fixed manner, such that a rotational movement of the shaft (27) brings about a rotational movement of the receiving element (4).

6. Apparatus according to one of the preceding claims, **characterized in that** a magnetic element (52) for the magnetic mounting of a longitudinal wire (7) arranged on a receiving element (4) is present in the region of the receiving position (6).

7. Apparatus according to one of the preceding claims, **characterized in that** three receiving elements (4) are present.

8. Apparatus according to one of the preceding claims, **characterized in that** the receiving position (6) comprises a receiving opening (48) for receiving a longitudinal wire (7), such that the longitudinal wire (7) can be arranged laterally on the insertion device (1) .

9. Apparatus according to one of the preceding claims, **characterized in that** the transport apparatus (11) is configured as an endless-loop elevator mechanism.

10. Apparatus according to one of the preceding claims, **characterized in that** a buffer store is arranged on a receiving element of the insertion device in such a way that the buffer store is present on the receiving element together with further elements of the receiving element so as to be rotatable about the axis of rotation D of the insertion device, wherein the buffer store is configured as a tank.

11. Cage welding machine (15) having an apparatus for loading the cage welding machine (15) according to one of the preceding Claims 1 to 10, **characterized in that** the axis of rotation D of the insertion device (1) is mounted on the cage welding machine (15).

12. Cage welding machine (15) according to Claim 11, **characterized in that** retaining elements (39) are present on wire guide tubes (25) of the cage welding machine (15) for the purpose of clamping the longitudinal wires (7).

13. Cage welding machine (15) according to Claim 11 or 12, **characterized in that** a buffer store is arranged on an advancing wheel of the cage welding machine in such a way that the buffer store is present on the advancing wheel together with further elements of the advancing wheel so as to be rotatable about an axis of rotation of the cage welding machine, wherein the buffer store is configured as a tank.

## Revendications

1. Dispositif pour équiper une machine à souder les paniers (15), le dispositif présentant un appareil d'insertion (1), l'appareil d'insertion (1) présentant un élément de réception (4) pour recevoir des fils longitudinaux (7) d'un panier (55) à fabriquer avec la machine à souder les paniers (15), l'appareil d'insertion (1) possédant une pluralité de positions de réception (6) pour tous les fils longitudinaux (7) du panier (55) sur l'élément de réception (4), les positions de réception (6) étant présentes dans la direction radiale à une distance d'un axe de rotation D de l'appareil d'insertion (1), l'appareil d'insertion (1) étant réalisé pour amener simultanément à la machine à souder les paniers (15), lors d'une opération d'insertion, au moins deux fils longitudinaux (7) agencés sur l'appareil d'insertion (1), l'opération d'insertion des fils longitudinaux (7) sur la machine à souder les paniers (15) étant effectuée par un mouvement de l'appareil d'insertion (1) dans la direction axiale de l'axe de rotation D de l'appareil d'insertion (1), **caractérisé en ce que** deux éléments de réception (4) sont présents, les éléments de réception (4) comprenant les positions de réception (6), les deux éléments de réception (4) étant présents de manière coulissante dans une direction axiale par rapport à l'axe de rotation D de l'appareil d'insertion (1).

2. Dispositif pour équiper une machine à souder les paniers (15) selon la revendication 1, **caractérisé en ce que** le dispositif présente un dispositif d'amenée (2), le dispositif d'amenée (2) présentant un bâti de stockage (9), un appareil de séparation (10), un dispositif de transport (11) et/ou un dispositif de transfert (12) et étant réalisé pour amener des fils longitudinaux (7) à l'appareil d'insertion (1), l'appareil d'insertion (1) étant réalisé pour pouvoir être équipé du fil longitudinal (7) par un mouvement du fil longitudinal (7) dans une direction transversale à l'axe de rotation D de l'appareil d'insertion (1) et le dispositif d'amenée (2) équipant l'appareil d'insertion (1) par le côté.

3. Dispositif pour équiper une machine à souder les paniers (15) selon l'une quelconque des revendications précédentes, **caractérisé en ce qu'**un élément de réception (4) présente un élément de support (5), l'élément de réception (4) étant monté de manière rotative sur l'élément de support (5).

4. Dispositif pour équiper une machine à souder les paniers (15) selon l'une quelconque des revendications précédentes, **caractérisé en ce qu'**un élément de réception (4) comprend des éléments de serrage (50), les éléments de serrage (50) étant réalisés pour serrer les fils longitudinaux (7) montés sur l'élément de réception (4).

5. Dispositif selon l'une quelconque des revendications précédentes, **caractérisé en ce que** l'appareil d'insertion (1) présente un arbre (27), l'arbre (27) et au moins un élément de réception (4) étant reliés entre eux de manière solidaire en rotation, de telle sorte qu'un mouvement de rotation de l'arbre (27) provoque un mouvement de rotation de l'élément de réception (4).

6. Dispositif selon l'une quelconque des revendications précédentes, **caractérisé en ce que**, dans la zone de la position de réception (6), un élément magnétique (52) est présent pour maintenir magnétiquement un fil longitudinal (7) agencé sur un élément de réception (4).

7. Dispositif selon l'une quelconque des revendications précédentes, **caractérisé en ce que** trois éléments de réception (4) sont présents.

8. Dispositif selon l'une quelconque des revendications précédentes, **caractérisé en ce que** la position de réception (6) comprend une ouverture de réception (48) pour recevoir un fil longitudinal (7), de telle sorte que le fil longitudinal (7) peut être agencé latéralement contre l'appareil d'insertion (1).

9. Dispositif selon l'une quelconque des revendications précédentes, **caractérisé en ce que** le dispositif de transport (11) est réalisé sous la forme d'un élévateur sans fin.

10. Dispositif selon l'une quelconque des revendications précédentes, **caractérisé en ce qu'**un réservoir d'accumulation est agencé sur un élément de réception de l'appareil d'insertion de telle sorte que le réservoir d'accumulation est présent sur l'élément de réception conjointement avec d'autres éléments de l'élément de réception de manière rotative autour de l'axe de rotation D de l'appareil d'insertion, le réservoir d'accumulation étant réalisé sous la forme d'une cuve.

11. Machine à souder les paniers (15) avec un dispositif pour équiper la machine à souder les paniers (15) selon l'une quelconque des revendications 1 à 10 précédentes, **caractérisée en ce que** l'axe de rotation D de l'appareil d'insertion (1) est monté sur la machine à souder les paniers (15).

12. Machine à souder les paniers (15) selon la revendication 11, **caractérisée en ce que** des éléments de maintien (39) sont présents sur des tubes d'amenée de fils (25) de la machine à souder les paniers (15) pour serrer les fils longitudinaux (7).

13. Machine à souder les paniers (15) selon la revendication 11 ou 12, **caractérisée en ce qu'**un réservoir d'accumulation est agencé sur une roue d'avance de la machine à souder les paniers de telle sorte que le réservoir d'accumulation est présent sur la roue d'avance, conjointement avec d'autres éléments de la roue d'avance, de manière rotative autour d'un axe de rotation de la machine à souder les paniers, le réservoir d'accumulation étant réalisé sous la forme d'une cuve.
